# EUROPEAN PATENT APPLICATION

(11) **EP 3 185 504 A1**
(43) Date of publication of application: **28.06.2017**
(21) Application number: 15307140.2
(22) Date of filing: 24.12.2015
(51) Int. Cl.: H04L 29/06, H04L 9/32

(54) **SECURITY MANAGEMENT SYSTEM FOR SECURING A COMMUNICATION BETWEEN A REMOTE SERVER AND AN ELECTRONIC DEVICE**

(71) Applicant: GEMALTO SA, 92190 Meudon (FR)
(72) Inventor: DEBOIS, Georges, 92190 Meudon (FR); GEORGIEVA, Mariya, 92190 Meudon (FR); GOUGET, Aline, 92190 Meudon (FR)
(74) Representative: Lotaut, Yacine Diaw

(57) **Abstract**

The present invention relates to a security management system (SYS) for securing a communication between a remote server (SP) and an electronic device (D), wherein said electronic device (D) being operated to:
- generate a first value by encoding a master key (t1) with a generated mask (m);
- encode the mask (m) with a cryptographic key retrievable by the remote server;
- compute a signature (s),
- compute a first session keys (kEnc1, KMac1) based on a key derivation function of said master key (t1);
said remote server (SP) being operated to:
- receive said encrypted mask (Enc) and said signature (s) transmitted by the electronic device;
- authenticate said electronic device (D) based on a verification and a validation of the signature (s);
- decrypt said encoded mask with a retrieve cryptographic key; using said decrypted mask to decrypt the encoded master key,
- compute a second session keys (Kenc2, Kmac2) based on said decrypted master key;
- encode a message (M1) with the second session keys (Kenc2, Kmac2);
- upon reception of the encoded message, the electronic device being operated to authenticate the remote server based on a successful decryption of the encoded message with the first session keys, a secure message channel is established between the electronic device and the remote server when the authentication of the remote server is successful.

## Description

### TECHNICAL FIELD

The present invention relates to a security management system for securing a communication between a remote server and an electronic device. The invention also relates to an associated method.

### BACKGROUND OF THE INVENTION

A security management system for securing a communication between a remote server and an electronic device well-known by the man skilled in the art is a security management system which is adapted to perform the GAP procedure (General Authentication procedure).

Said GAP procedure comprises:
- a Password-Authenticated Connection Establishment procedure referred as PACE. The PACE permits to open a secure channel between the electronic device and a local terminal;
- a Terminal authentication procedure referred as TA2. The TA2 permits the electronic device to authenticate the remote server;
- a Chip authentication procedure referred as CA2, or CA3. The CA2, CA3 procedure permits a remote server to authenticate an electronic device. It is to be noted that the CA3 associates a pseudonym to the electronic device.

One problem of this prior art is that the GAP procedure uses a multiple cryptographic functions which are time consuming and complex and which in term of coding size is memory consuming.

### SUMMARY OF THE INVENTION

The following summary of the invention is provided in order to provide a basic understanding of some aspects and features of the invention. This summary is not an extensive overview of the invention and as such it is not intended to particularly identify key or critical elements of the invention or to delineate the scope of the invention. Its sole purpose is to present some concepts of the invention in a simplified form as a prelude to the more detailed description that is presented below.

It is an object of the invention to provide a security management system for securing a communication between a remote server and an electronic device which is simpler than the GAP procedure while performing the same goal.

To this end, there is provided a security management system for securing a communication between a remote server and an electronic device, wherein said security management system comprises:
- said electronic device which is adapted to:
   - compute a first value based on a random mask and on a random first token;
   - send said first value to a local terminal ;
   - encrypt said random mask;
   - compute a signature based on a message received from said remote server;
   - compute session keys based on a key derivation function of said first token;
   - send said encrypted mask and said signature to said remote server via said local terminal;
   - authenticate said remote server with a authentication message received from said remote server through a secure messaging channel;
- said remote server which is adapted to:
   - receive said encrypted mask and said signature;
   - authenticate said electronic device with said signature;
   - receive a second value from said local terminal which is based on said first value;
   - decrypt said encrypted mask;
   - compute a second token based on said decrypted mask and said second value;
   - compute session keys based on said second token to open a secure messaging channel;
   - send said authentication message to said electronic device through said secure messaging channel.

According to non-limitative embodiments of the invention, the security management system in accordance with the invention further comprises the following characteristics.

In a non-limitative embodiment, the electronic device is further adapted to compute said random mask and said random first token.

In a non-limitative embodiment, the computation of said first value is an XOR of said mask and of said first token.

In a non-limitative embodiment, said electronic device comprises a secret password and the computation of said first value is further based on said secret password and the second value is further based on an input secret password.

In a non-limitative embodiment, said security management system further comprises said local terminal which is adapted to:
- compute said second value;
- receive said first value, said encrypted mask and said signature from said electronic device; and
- transmit said encrypted mask, said signature and said second value to said remote server.

In a non-limitative embodiment, said local terminal is further adapted to receive an input secret password and to compute said second value based on said input secret password.

In a non-limitative embodiment, said electronic device further comprises a pair of public-private keys and is further adapted to:
- compute said signature using said private key;
- send said public key to said remote server.

In a non-limitative embodiment, said pair of public-private keys is unique to the electronic device.

In a non-limitative embodiment, said pair of public-private key is shared by a group of electronic devices.

In a non-limitative embodiment, said remote server comprises a pair of public and private authentication keys and is further adapted to send said public authentication key to said electronic device.

In a non-limitative embodiment, said electronic device is adapted to encrypt said mask using said public authentication key.

In a non-limitative embodiment, said remote server is adapted to decrypt said encrypted mask using said private authentication key.

In a non-limitative embodiment,
- said remote server is further adapted to send a certificate of said public authentication key to said electronic device;
- said electronic device is further adapted to check said certificate using said public authentication key.

In a non-limitative embodiment, the authentication message comprises a certificate of said remote server and the electronic device is further adapted to:
- decipher and verify the integrity of said authentication message with its session keys;
- verify said certificate.

In a non-limitative embodiment,
- said remote server further comprises a pair of public-private sector keys and is further adapted to send said public sector key to said electronic device via said local terminal;
- said electronic device is further adapted to compute a pseudonym based on said public sector key and to compute said signature based on said pseudonym.

In a non-limitative embodiment, said electronic device is a secure element.

In a non-limitative embodiment, said remote server is a service provider server.

In addition, there is provided an electronic device adapted to cooperate with a remote server in order to secure a communication with said remote server, wherein said electronic device is adapted to:
- compute a first value based on a random mask and on a first random token;
- send said first value to a local terminal;
- encrypt said random mask;
- compute a signature based on a message received from said remote server;
- compute session keys based on a key derivation function of said first token;
- send said encrypted mask and said signature to said remote server via said local terminal; and
- authenticate said remote server with an authentication message received from said remote server through a secure messaging channel.

In addition, there is provided a remote server adapted to cooperate with an electronic device in order to secure a communication with said electronic device, wherein said remote server is adapted to:
- receive said encrypted mask and said signature;
- authenticate said electronic device with said signature;
- receive a second value from said local terminal which is based on said first value;
- decrypt said encrypted mask;
- compute a second token based said decrypted mask and said second value;
- compute session keys based on said second token to open a secure messaging channel; and
- send an authentication message to said electronic device through said secure messaging channel.

In addition, there is provided a method for securing a communication between a remote server and an electronic device, wherein said method comprises:
- compute by means of said electronic device a first value based on a random mask and on a random first token;
- encrypt by means of said electronic device said random mask;
- compute by means of said electronic device a signature based on a message received from said remote server;
- compute session keys based on a key derivation function of said first token;
- send by means of said electronic device said first value to a local terminal;
- send by means of said electronic device said encrypted mask and said signature to said remote server via said local terminal;
- receive by means of said remote server said encrypted mask and said signature;
- receive by means of said remote server a second value from said local terminal which is based on said first value;
- authenticate said electronic device by means of said remote server with said signature;
- decrypt by means of said remote server said encrypted mask;
- compute by means of said remote server a second token based on said decrypted mask and said second value;
- compute by means of said remote server session keys based on said second token to open a secure messaging channel;
- send by means of said remote server a authentication message to said electronic device through said secure messaging channel;
- authenticate said remote server by means of said electronic device with said authentication message.

To achieve those and other advantages, and in accordance with the purpose of the invention as embodied and broadly described, the invention proposes a security management system for securing a communication between a remote server and an electronic device, wherein:
- said electronic device being operated to:
   - generate a first value by encoding a master key with a generated mask;
   - encode the mask with a cryptographic key retrievable by the remote server;
   - compute a signature,
   - compute a first session keys based on a key derivation function of said master key;
- said remote server being operated to:
   - receive said encrypted mask and said signature transmitted by the electronic device;
   - authenticate said electronic device based on a verification and a validation of the signature;
   - decrypt said encoded mask with a retrieve cryptographic key; using said decrypted mask to decrypt the encoded master key,
   - compute a second session keys based on said decrypted master key;
   - encode a message with the second session keys ;
   - upon reception of the encoded message, the electronic device being operated to authenticate the remote server based on a successful decryption of the encoded message with the first session keys, a secure message channel is established between the electronic device and the remote server when the authentication of the remote server is successful.

According an embodiment of the present invention, when an authentication of a user of the electronic device is performed by the remote server the followings steps are performed:
said electronic device being operated to:
   - compute a first hash H1 from a stored secret password and add the first hash into the generation of the first value,
   - compute a second hash H2 from a entered secret password by the user and add the first hash with the second hash into the generation of a second value,
   - the first value and the second value being generated so that if the first value equal to the second value, then the entered PIN corresponds to the stored PIN and the user is authenticated.

According an embodiment of the present invention, said electronic device communicates with the remote server by means of a local terminal which is adapted to:
- compute said second value;
- receive said first value, said encrypted mask and said signature from said electronic device; and
- transmit said encrypted mask, said signature, said first value and said second value to said remote server.

According an embodiment of the present invention, the master key is pre-stored into the electronic device or generated at each establishment of a secure channel message between the electronic device and the remote server.

The present invention also relates to an electronic device adapted to cooperate with a remote server in order to secure a communication with said remote server , according any previous claims, wherein said electronic device is adapted to:
- generate a first value by encoding a master key with a generated mask ;
- encode the mask with a cryptographic key retrievable by the remote server;
- compute a signature,
- compute a first session keys based on a key derivation function of said master key;
- send said encrypted mask and said signature to said remote server; and
- authenticate the remote server based on a successful decryption of a received encoded message with the first session keys, a secure message channel is established between the electronic device and the remote server when the authentication of the remote server is successful.

The present invention also relates to a remote server adapted to cooperate with an electronic device in order to secure a communication with said electronic device, according any of the previous claims, wherein said remote server is adapted to:
- receive said encrypted mask and said signature transmitted by the electronic device;
- authenticate said electronic device based on a verification and a validation of the signature;
- decrypt said encoded mask with a retrieve cryptographic key; using said decrypted mask to decrypt the encoded master key,
- compute a second session keys based on said decrypted master key;
- encode a message with the second session keys ;
- send said encoded message to the electronic device to request its authentication to the electronic device and to open a secure messaging channel with this electronic device.

The present invention also relates to a method for securing a communication between a remote server and an electronic device, according to any of the previous claims, wherein said method comprises:
- said electronic device being operated to:
- generate a first value by encoding a master key with a generated mask;
- encode the mask with a cryptographic key retrievable by the remote server;
- compute a signature,
- compute a first session keys based on a key derivation function of said master key;
- said remote server being operated to:
- receive said encrypted mask and said signature transmitted by the electronic device;
- authenticate said electronic device based on a verification and a validation of the signature;
- decrypt said encoded mask with a retrieve cryptographic key; using said decrypted mask to decrypt the encoded master key,
- compute a second session keys based on said decrypted master key;
- encode a message with the second session keys;
- upon reception of the encoded message, the electronic device being operated to authenticate the remote server based on a successful decryption of the encoded message with the first session keys, a secure message channel is established between the electronic device and the remote server when the authentication of the remote server is successful.

The foregoing is a summary and thus may contain simplifications, generalizations, and omissions of detail; consequently, those skilled in the art will appreciate that the summary is illustrative only and is not intended to be in any way limiting.

For a better understanding of the embodiments, together with other and further features and advantages thereof, reference is made to the following description, taken in conjunction with the accompanying drawings. The scope of the invention will be pointed out in the appended claims.

### BRIEF DESCRIPTION OF THE FIGURES

Some embodiments of methods and/or apparatus in accordance with embodiments of the present invention are now described, by way of example only, and with reference to the accompanying drawings, in which:
- Fig.1 1 illustrates schematically a security management system according to a non-limitative embodiment of the invention;
- Fig. 2 illustrates schematically a non-limitative embodiment of an electronic device of the security management system of Fig. 1;
- Fig. 3 illustrates schematically a non-limitative embodiment of a local terminal of the security management system of Fig. 1;
- Fig. 4 illustrates schematically a non-limitative embodiment of a remote server of the security management system of Fig. 1; and
- Fig. 5 and Fig. 6 illustrate a schematic organization chart of a method carried out by the security management system of Fig. 1.

### DESCRIPTION OF EMBODIMENTS OF THE INVENTION

It will be readily understood that the components of the embodiments, as generally described and illustrated in the figures herein, may be arranged and designed in a wide variety of different configurations in addition to the described example embodiments. Thus, the following more detailed description of the example embodiments, as represented in the figures, is not intended to limit the scope of the embodiments, as claimed, but is merely representative of example embodiments.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

In the following description, numerous specific details are provided to give a thorough understanding of embodiments. One skilled in the relevant art will recognize, however, that the various embodiments can be practiced without one or more of the specific details, or with other methods, components, materials, et cetera. In other instances, well-known structures, materials, or operations are not shown or described in detail to avoid obfuscation.

The present invention is not specific to any particular hardware or software implementation, and is at a conceptual level above specifics of implementation. It is to be understood that various other embodiments and variations of the invention may be produced without departing from the spirit or scope of the invention. The following is provided to assist in understanding the practical implementation of particular embodiments of the invention.

The same elements have been designated with the same referenced numerals in the different drawings. For clarity, only those elements and steps which are useful to the understanding of the present invention have been shown in the drawings and will be described.

Further, the mechanisms of data communication between the parties and their environment have not been detailed either, the present invention being here again compatible with usual mechanisms.

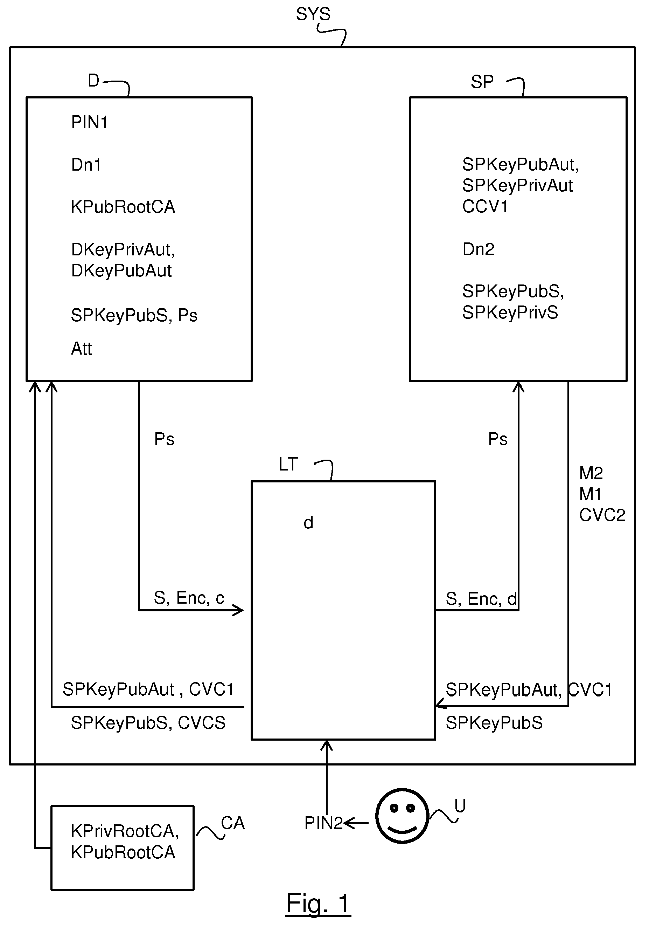

Furthermore, the connecting lines shown in the various figures contained herein are intended to represent exemplary functional relationships and/or physical couplings between the various elements. It should be noted that many alternatives or additional functional relationships or physical connections may be present in a practical system. Furthermore, the various entities in FIG. 1 to FIG. 6 may communicate via any suitable communication medium (including the Internet), using any suitable communication protocol.

The present invention relates to a security management system SYS.

Said security management system SYS is illustrated in Fig. 1 in a non-limitative embodiment.

Said security management system SYS comprises:
- A electronic device D; and
- A remote server SP.

In a non-limitative embodiment, the security management system SYS further comprises a local terminal LT.

The different elements of the security management system SYS are described in more detail in the following.

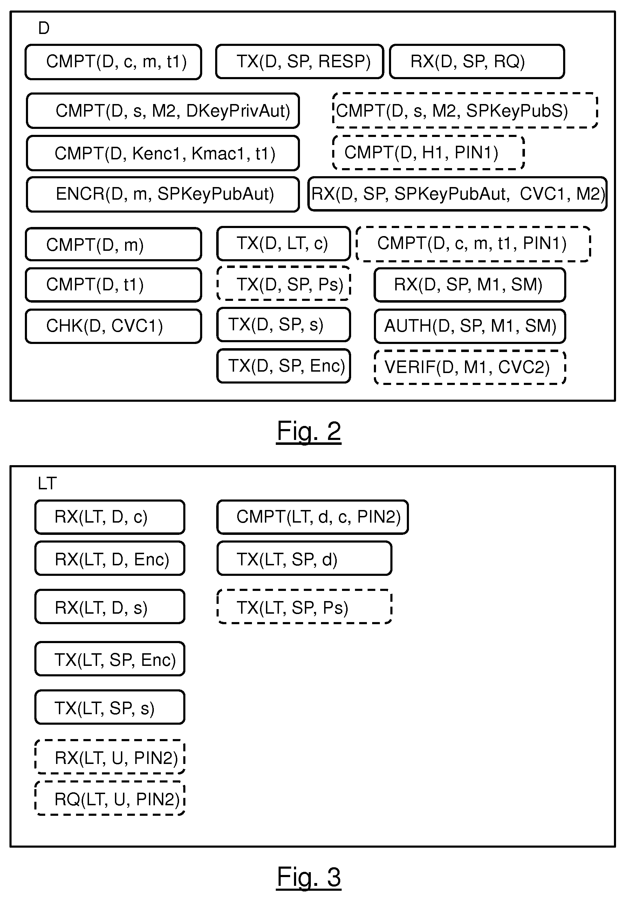

The electronic device D is described with reference to Fig. 1 and 2, and the remote server SP with reference to Fig. 1 and 3.

A communication between said remote server SP and said electronic device D comprise data exchanges between them. A secure communication needs a secure messaging channel in order to transmit said data.

As will be described hereinafter, in order to secure a communication between said remote server SP and said electronic device D, a mutual authentication is performed between said remote server SP and said electronic device D, session keys are generated and the secure messaging channel is set-up so that said remote server SP and said electronic device D may securely communicate together using said session keys.

### • Electronic device

In a non-limitative embodiment, the electronic device D is a secure element.

A secure element is a secured component which may perform cryptographic functionalities and is adapted to store a secret key.

In a non-limitative variant, the electronic device D is a smart card. In non-limitative examples, the smart card is an Electronic Identity Card, is a health card, a driving license, a passport, a privacy card, a financial service card, an access card etc. It may be contact or contactless.

In other non-limitative variants, the electronic device D is an eSE (embedded secure element), a micro-SD, an UICC, a TEE (Trusted Execution Environment), a TPM (trusted Platform Module) etc. It is to be noted that a TEE and a TPM may be hardware, software or a combination of hardware and software.

In another non-limitative embodiment, the electronic device D is a mobile phone, a smart phone, a tablet etc.

As illustrated in Fig. 1, said electronic device D comprises a plurality of attributes Att.

In non-limitative examples, said attributes Att are:
- the age of the end-user U of the electronic device D;
- the sex of the end-user U of the electronic device D;
- a geographical zone where the end-user U of the electronic device D lives (country, city etc.).

It is to be noted that when the end-user U wants to access a service of a service provider through a remote server SP of said service provider, such as in a non-limitative example, a banking payment, the remote server SP will establish a communication with the electronic device D of the end-user U and should ensure that it is the right end-user U via a secret password the end-user enters.

The electronic device D may comprise a secret password PIN1 also referred as stored P I N 1.

In a first non-limitative embodiment, the secret password PIN1 is a short secret password. In another non-limitative embodiment, the secret password PIN1 is a passphrase.

Of course these examples of secret password PIN1 are merely examples, various existing secret password PIN1 can be employed as secret password PIN1 such as a PIN, a fingerprint or any other biometric information, identifier, or any data related to the user.

In the following description, the short secret password will be taken in a non-limitative example.

In non-limitative embodiments illustrated in Fig. 1, the electronic device D further comprises:
- a pair of public-private keys DKeyPubAut, DKeyPrivAut;
- domain parameters Dn1;
- a public root certificate key KPubRootCA. Said root certificate has been provided by a certification authority CA which holds the associated private root certificate key KPrivRootCA.

In non-limitative examples, the domain parameters Dn1 are the parameters of:
- the elliptic curves which may be used in some of the cryptographic functions performed by the electronic device D, such as the signing or the encryption; or
- the algorithm RSA-DH which may be used in some of the cryptographic functions performed by the electronic device D, such as the signing or the encryption.

In a first non-limitative embodiment, as in CA2 procedure, said pair of public-private key DKeyPubAut, DKeyPrivAut is shared by a group GR of electronic devices D. This avoids traceability of the end-user's activities with the remote server SP, such as how it uses the services proposed by a service provider through its remote server SP.

In a second non-limitative embodiment, as in the CA3 procedure, the private key DKeyPrivAut is unique to the electronic device D and the public key DKeyPubAut is also shared by the group GR of electronic devices D. The private key DKeyPrivAut is divided in two sub-private keys for each different electronic device D which are part of said group GR. Hence, an electronic device D may be differentiated by the pair of sub-keys. Two different pseudonyms Ps are computed for each different tokens of the group GR respectively with said two private sub-keys. This avoids traceability of the end-user's activities with the remote server SP.

In a third non-limitative embodiment, said pair of public-private keys DKeyPubAut, DKeyPrivAut is unique to the electronic device D. This third embodiment provides a higher protection of end-user privacy and non-traceability of the end-user's activities with the remote server SP, such as how it uses the services proposed by a service provider through its remote server SP.

A group GR referred to a set of electronic devices D which have been distributed by a same authority A, such as in non-limitative examples a group of banks, insurances, official administrations etc.

The functions of the electronic device D are illustrated in Fig. 2.

The electronic device D is adapted to perform the following cryptographic functions, said functions comprising one or a plurality of cryptographic unitary operations:
- 1) generate a random mask m for each secure channel message to be established between the electronic device and the remote server, (function illustrated CMPT(D, m)); In a non-limitative embodiment, the random mask m (also called mask m in the following) is a chain of 0 and 1 of size of 128 bytes.
   The electronic device D generates a first value c by encoding a master key t1 with the random mask (function illustrated CMPT (D, c, m, t1)).
   In an embodiment, the encoding algorithm is a symmetric key encryption algorithm. The symmetric key encryption may include block cipher algorithms, such as the Data Encryption Standard (DES) based algorithm(s) and Advanced Encryption Standard (AES) based algorithm(s), and stream cipher algorithms, such as RC4. In a non-limitative embodiment, the computation of said first value c is an XOR of said mask m and of said master key t1.
   In an embodiment, the master key t1 is pre-stored into the electronic device D. In another embodiment, the master key t1 is a token generated at each establishment of a secure channel message between the electronic device and the remote server, function illustrated CMPT (D, t1)).
   In the following description, the token t1 will be taken as the master key in a non-limitative example.
   In a non-limitative embodiment, the token t1 (also called first token t1 in the following) is a chain of 0 and 1 of size of 128 bytes.
- 2) compute a signature s with its private key DKeyPrivAut and data to be signed. In an embodiment the data to be signed is a message M2 received from said remote server SP. The message M2 may be a challenge sent by the remote server SP.
   - The signature S may be computed as illustrated by the function CMPT(D, s, M2, DKeyPrivAut);
   - In a non-limitative embodiment, the signature s is performed using a cryptographic algorithm which may be an RSA, or an elliptic curve such as ECSchnorr, or ECDSA.
- 3) compute a first session keys Kenc1, Kmac1 based on a key derivation function of said token t1 (function illustrated CMPT(D, Kenc1, Kmac1, t1)); There are several existing different algorithms in use for generating a session key from a master key.
   In non-limitative embodiments, a key derivation function KDF may be:
   - OKDF(1-6), TKDF(1-4);
   - NIST-800-108-KDF, NIST-800-56-KDF-(A/B/C)
   - X9.63-KDF.
- 4) encode (encipher) the random mask m with a cryptographic key (function illustrated ENCR (D, m, SPKeyPubAut)). The encoding algorithm is a predetermined mathematical operation established between the electronic device and the remote server SP. The recipient of encoded mask (the remote server SP) may perform a complimentary mathematical operation to unencode (decipher) the encoded mask. The enciphering and deciphering of the token is performed utilizing the cryptographic key determined by the particular cryptographic scheme implemented between the correspondents. Consequently, there are certain parameters that must be known beforehand between the correspondents, for example, in public key or symmetric key systems. In all of these schemes, it is assumed that the cryptographic keys, be it the private key, the public key or the symmetric key, is derived and valid as specified in the protocol scheme. Said encrypted random mask is referred as Enc in the following.

In an embodiment, the cryptographic key is the public authentication key SPKeyPubAut of said remote server SP. Said public authentication key SPKeyPubAut is received by the electronic device D from the remote server SP.

In an embodiment, the cryptographic key is a secret embedded into the electronic device and into the remote server SP. In an embodiment, the encoding algorithm may be a symmetric key encryption algorithm receiving as inputs the random mask and the secret key and encoded random mask ENC. The symmetric key encryption may include block cipher algorithms, such as the Data Encryption Standard (DES) based algorithm(s) and Advanced Encryption Standard (AES) based algorithm(s), and stream cipher algorithms, such as RC4.

When the electronic device D has generated the first value c, the encrypted mask Enc, and the signature s, it is further adapted to:
- send said first value c, said encrypted mask Enc and said signature s to said remote server SP.

In a second non-limitative embodiment, the electronic device D computes a pseudonym Ps based on a public sector key SPKeyPubS and computes said signature s based on said pseudonym Ps and on said message M2 (function illustrated in dotted line CMPT(s, M2, SPKeyPubS)). Said public sector key SPKeyPubS is received from the remote server SP.

The pseudonym Ps generated is a domain-specific pseudonym. Indeed, the pseudonym Ps depends on the public sector key SPKeyPubS that is managed by the electronic device D and on public information related to the party that will subsequently authenticate the pseudonym, here on the public key SPKeyPubS of the remote server SP.

The pseudonym Ps is therefore specific per pair (electronic device, remote server). It prevents the linkability of the same electronic device D across several remote servers. It means that the end-user's activities of the electronic device D with different parties, such as different service providers, may not be linked together.

In a non-limitative embodiment, as in the CA3 procedure, the two pseudonyms Ps associated to the electronic device D are equal to Ps1 = DkeyPrivAut1*SPKeyPubS, and Ps2 = DkeyPrivAut2*SPKeyPubS with DkeyPrivAut1 and DkeyPrivAut2 the sub-keys derived from the private key DkeyPrivAut.

The session keys Kenc1, Kmac1 computed may be a pair of session keys. The first session key Kenc1 permits to encrypt some data, and the second session key Kmac1 permits to compute a MAC1 (Message Authentication Code) of the data, said MAC1 being used to verify the integrity of the data.

In a non-limitative embodiment, the electronic device D is further adapted to:
- check a certificate CVC1, received from the remote server SP, using the public authentication key SPKeyPubAut received from said remote server SP (function illustrated CHK(D, CVC1)).

The certificate CVC1 is a chain of root certificate and of specific certificates based on said public root certificate key KPubRootCA and on said public authentication key SPKeyPubAut.

It is to be reminded that a certificate comprises some data and a signature of said data.

By transmitting said certificate CVC1, the remote server SP transmits the access permissions and role of said remote server SP.

The certificate CVC1 permits the remote server SP to:
- indicate via the role that it is a remote server SP and not a DVCA ("Document Verifier Certificate Authority") nor a certifier authority CA.
- prove explicit access permission(s) for exactly certain data of said electronic device D and for certain services proposed by the electronic device D, such as the generation of a pseudonym Ps.

It is to be reminded that a CVCA certificate ("Country Verifying Certificate Authority") is stored in the electronic device D with the associated public root certificate key KPubRootCA. This CVCA certificate is provided by a certification authority referred as CA. In a not limitative example, said CA authority is the certification authority of a country. This CVCA certificate (and therefore the public root certificate key KPubRootCA) is stored at the personalization production phase of said electronic device D.

This certificate CVCA is the root of a hierarchy of certificates. All of the certificates which follow in the hierarchy are signed with a private key of their predecessor. The certificate which follows the CVCA certificate is the DVCA certificate ("Document Verifier Certificate Authority"). This DVCA certificate is provided by a certification authority referred as DV. In a not limitative example, said DV authority is the certification authority of the group of banks within the country.

The certificate CVC1 is signed with the private key of the predecessor certificate which is the DVCA. In a not limitative example, the remote server SP is a server of a service provider who is a bank of the group of banks of the country.

Hence, in addition to its own certificate CVC1, the remote server SP transmits to said electronic device D the DVCA certificate. Hence, said electronic device is able to extract from said DVCA certificate the associated DVCA public key.

Hence, when checking the certificate CVC1 of the remote server SP, the electronic device D verifies the signature of all the certificates of the hierarchy beginning by the CVCA certificate. It verifies each signature of the certificates with the public key extracted from the predecessor certificate. Finally, the electronic device D verifies the signature of the certificate CVC1 with the public key extracted from the predecessor certificate DVCA.

If the certificate CVC1 is valid, it means that the remote server SP is reliable. It means that the remote server SP owns the rights to access one or a plurality of functions proposed by the electronic device D, such as in a non-limitative example, the generation of a pseudonym Ps, the reading of certain files and/or the updating of certain files of the electronic device D etc.

When a pseudonym Ps is used, the certificate CVC1 further comprises the public sector key SPKeyPubS.

When generating a pseudonym Ps, the electronic device D uses said public sector key SPKeyPubS. As the generation of a pseudonym Ps is well-known by the man skilled in the art, it won't be described here.

When the authenticity and integrity of the certificate(s) has been proved, the electronic device D extracts and store in memory the following data:
- the access permissions and role of the remote server SP from the certificate CVC1;
- the public authentication key SPKeyPubAut;
- the public sector key SPKeyPubS if there is one.

It is to be noted that the authenticity proves that the data in the certificate have been signed by an authorized entity, here the remote server SP. The integrity proves that the certificate is correctly built and that the transmitted data are correct.

It is to be noted that the electronic device D is further adapted to receive the public authentication key SPKeyPubAut, its associated certificate CVC1 and said message M2 from the remote server SP via the local terminal LT (function illustrated RX(D, SP, SPKeyPubAut, CVC1, M2)).

It is to be noted that the cryptographic functions 2, 3, 4 may be performed by the electronic device in any order.

In an embodiment, an end-user U who wants to access a service of a service provider uses its electronic device D which will communicate with the remote server SP of the service provider. In some cases, to access such a service, the end-user U has to prove that he knows the secret password PIN1 which is only stored in said electronic device D. The end-user U enter an input secret password PIN2 through his electronic device D The electronic device D is adapted to verify that the secret password PIN2 match with the secret password PIN1 stored into the electronic device D.

In an embodiment, the entered secret password PIN2 is verified by the remote server SP. In this case, the electronic device D is further adapted to apply a "one way" hashing function (function illustrated CMPT (D, H1, PIN1)) to its stored secret password PIN1 to transform the stored secret password PIN1 into a form which is unintelligible. The generated first hashed H1 has a fixed-size set of bits that serves as a unique "digital fingerprint" for the stored secret password PIN1. If the original stored secret password PIN1 is changed and hashed again, it has a very high probability of producing a different digest. Thus, hash functions can provide message integrity, assuring that the stored secret password PIN1 has not been altered or corrupted. Any conventional algorithm that may be, for example, one version of a cyclic redundancy check (CRC) algorithm, message-digest (MD) algorithm, or secure hash algorithm (SHA) may be employed to generate the first hashed PIN1.

The first hash H1 is added, by the electronic device D to the generation of the first value c (function illustrated in Fig. 2 in dotted line CMPT (D, c, m, t1, PIN1)). In an embodiment, the computation of the first value c may be based on the hash H1 and in a non-limitative example is as following:
c=m XOR t1 XOR H1.

It is to be noted that the computation of the hash H1 may be performed on the fly each time the remote server SP wants to open a secure communication with the electronic device D. In another embodiment, the first hash H1 is computed once and stored in a memory of the electronic device D. In this case, it will be computed again only when the end-user changes his short secret password PIN1.

The "one way" hashing function is applied, by the electronic device, to the entered secret password PIN2 to transform the entered secret password PIN2 into a second hash H2.

The second hash H2 is added, by the electronic device D to the generation of a second value d. In an embodiment, the computation of the second value d may be based on the hash H2 and in a non-limitative example is as following:
d = m XOR t1 XOR H1 XOR H2.

When the electronic device D has generated the first value c, the second value d, the encrypted mask Enc, and the signature s, it is further adapted to send to the remote server:
- said first value c;
- said second value d
- said encrypted mask Enc,
- said signature s

The remote server is able to authenticate the user from the received first value c and the second value d. indeed, when the entered password PIN2 is the right one, then d = c -> user authenticated.

In an embodiment, only the second value d with the encrypted mask Enc and the signature s are sent to the remote server. The remote server will decrypt the mask and from the decrypted mask and the second value d generates a second master key. From the generated second master keys the remote server derives the second session keys. But if the entered PIN does not match the PIN stored into the electronic device, then the second value d does not correspond to the first value c. Therefore, the generated second master key and the derived second session keys are actually corrupted. The computed authentication message from the corrupted session is sent by the remote server to the electronic device for authentication. The authentication of the remote server will be rejected and the electronic device can notify the remote server of the failure of its authentication.

When a pseudonym is used, the electronic device D is further adapted to send said pseudonym Ps via the local terminal LT (function illustrated in dotted line TX (D, SP, Ps)).

Hence the cryptographic functions performed by the electronic device D may be:
- a signature computation (function referred 2 as previously described);
- a pair of session keys computation (function referred 3 as above-described);
- random generation (mask m and token t1).
- an encryption (function referred 4 as above-described);
- a hash computation.

The number of cryptographic functions executed by said electronic device D is reduced compared to the GAP procedure where the electronic device D has to perform:
- an encryption;
- two Key Agreements (one during the PACE procedure, and one during the CA2/CA3 procedure);
- two verifications of certificates during the TA2 procedure;
- two key sessions computation for two set-up of secure messaging channel, one with a local terminal after the PACE procedure, and one with a remote server after the CA2/CA3 procedure;
- four random computations, one during the PACE procedure, one during the TA2 procedure, and two on pseudonym computation;
- one MAC computation.

The functions performed by the electronic device D in the GAP procedure are not described here in details as there are well-known by the man skilled in the art. There are described in the document BSI TR_03110 V2.20 part 2 edited by the Federal Office For Information Security.

### • Local terminal

The electronic device D may communicate with a remote server SP by means of the local terminal LT. Said local terminal LT comprises a contact or contactless interface. It acts as a gateway between said electronic device D and said remote server SP.

It is to be noted that contrary to the GAP procedure (more particularly the PACE procedure), there is no establishment of a local secure messaging channel between the local terminal LT and the electronic device D.

In a non-limitative embodiment, the local terminal LT is a local PC, a cryptographic reader etc. In a non-limitative embodiment, the local terminal LT is used to enter the short secret password PIN2 and to process some cryptographic operations.

In an embodiment, the encrypted mask, the signature S and the first value are transmitted to the remote server through the local terminal. It is to be noted that the hash H1 of the stored short secret password PIN1 is not transmitted in clear to the local terminal LT. Instead, the local terminal receives the first value c which can change each time the remote server SP established a communication with the electronic device D.

The functions of the local terminal LT are illustrated in Fig. 3.

The local terminal LT is adapted to:
- receive said first value c, said encrypted mask Enc and said signature s from said electronic device D (functions illustrated RX (LT, D, c), RX (LT, D, Enc), RX (LT, D, s)). It is to be noted that these data may be received altogether or separately;
- transmit said encrypted mask Enc, said signature s to said remote server SP (functions illustrated TX (LT, SP, Enc), TX (LT, SP, s)). It is to be noted that these data may be transmitted altogether or separately.

In the case the electronic device D doesn't comprise a display, the local terminal LT is further adapted to:
- request the user U to enter a short secret password PIN2 (function illustrated in dotted line RQ (LT, U, PIN2)).

In the case the electronic device D doesn't comprise a keypad, the local terminal LT is further adapted to:
- receive an input short secret password PIN2 from the end-user U (functions illustrated in dotted line RX (LT, U, PIN2)).

In the case the electronic device D comprises a display and a keypad, the end-user U may key the value of the short secret password PIN2 directly onto the electronic device D and the PIN value may be verified:
- a) either directly by the electronic device D; or
- b) by the remote server.

In the case a) if the PIN value is wrong, a new PIN is requested to be entered by the user on the display. There is no transmission of a second value d to the remote server SP.

If the PIN value is correct, the electronic device D computes the second value d as described in the following, and the local terminal LT sends the second value d with the signature s and the encrypted mask Enc to the remote server SP as described in the following.

In the case b), the local terminal LT sends the second value d with the signature s and the encrypted mask Enc to the remote server SP as described in the following.

It is to be noted that when the end-user U enters the short secret password PIN2 via the local terminal LT, said local terminal LT will only knows the PIN value entered, and if the end-user enters a wrong PIN value, the local terminal LT will not know the true value of the stored short secret password PIN1. Contrary to the GAP procedure, especially in the PACE procedure, the stored short secret password PIN1 is not revealed to the local terminal LT as it is hidden in the first value c with the mask m and the first token t1. Therefore, this brings higher security level than the GAP procedure.

When the local terminal LT receives the input short secret password PIN2, in a non-limitative embodiment, it is further adapted to:
- compute the second hash H2 may
- compute a second value d based on said first value c and on said hash H2 of said input short secret password PIN2 (function illustrated CMPT(LT, d, c, PIN2));
- send said second value d to said remote server SP (function illustrated TX(LT, SP, d)).

In another non-limitative embodiment, when the electronic device D receives the input short secret password PIN2, the local terminal LT is further adapted to:
- receives said second value d from the electronic device D, said second value d being based on said first value c and on said hash of said input short secret password PIN2; and
- send said second value d to said remote server SP.

In a non-limitative embodiment, the second value d = c XOR H2, with H2 an hash of the input short secret password PIN2.

Hence, when a PIN is used, as the first value c = m XOR t1 XOR H1, d = m XOR t1 XOR H1 XOR H2. When the short secret password entered PIN2 is the right one, then d = c. Therefore, it is said second value d equal to c which is transmitted to the remote server SP.

When the short secret password entered PIN2 is not the correct one, the second value d will comprise a difference between the two hash value H1 and H2.

Therefore, in both cases (right or wrong PIN2), the stored PIN value PIN1 is never transmitted in clear to the remote server SP.

It is to be noted that the short secret password PIN1 stored in the electronic device D is also not revealed to the remote server SP as it is masked with the mask m, the first token t1 and the hashes H1 and H2.

Therefore, the security is improved as there is no storage of the value of the short secret password PIN1 in the remote server SP.

It is to be noted that the second value d may change at each secure communication between the electronic device D and the remote server SP because of the first value c which is a randomized value thanks at least to the mask m. It improves the security.

It is to be noted that when a pseudonym Ps is generated by the electronic device D, the local terminal LT is further adapted to transmit said pseudonym Ps to said remote server SP (function illustrated in dotted line TX(LT, SP, Ps)).

It is to be noted that the mask m used in the computation of the first value c avoids the local terminal LT to be able to recover the value of the first token t1 (when the input PIN2 is correct) and thus it avoids the local terminal LT to be able to compute the session keys Kenc1 and Kmac1 which are derived from said first token t1.

Hence, the functions performed by the local terminal LT may be limited to a hash H2 and an XOR as above-described. The number of functions executed by said local terminal LT is reduced compared to the GAP procedure, in particular in the PACE procedure, where the local terminal LT has to perform a deciphering of a nonce, a random generation (for generating ephemeral key pair), a Key Agreement, a set-up of a secure messaging channel with the electronic device D and a computation of a MAC. The functions performed by the local terminal LT in the GAP procedure are not described here in details as there are well-known by the man skilled in the art.

### • Remote server

In a non-limitative example, the remote server SP is a service provider server of a service provider which provides one or a plurality of services to which the end-user U wants to access.

As illustrated in Fig. 1, the remote server SP comprises:
- a pair of public and private authentication key SPKeyPubAut, SPKeyPrivAut;
- domain parameters Dn2;
- a cryptographic key,
- a certificate CVC1 of said public authentication key SPKeyPubAut.

In non-limitative examples, the domain parameters Dn2 are the parameters of the elliptic curves which may be used for the generation of the pair of public and private authentication key SPKeyPubAut, SPKeyPrivAut and/or of a pair of the public-private sector keys SPKeyPubS, SPKeyPrivS.

In non-limitative examples, the elliptic curves are:
- NIST P-256 (secp256r1);
- BrainpoolP256r.

If a pseudonym Ps is generated by the electronic device D, the remote server SP further comprises:
- a pair of public-private sector keys SPKeyPubS, SPKeyPrivS;
- a certificate CVCS of said public sector keys SPKeyPubS.

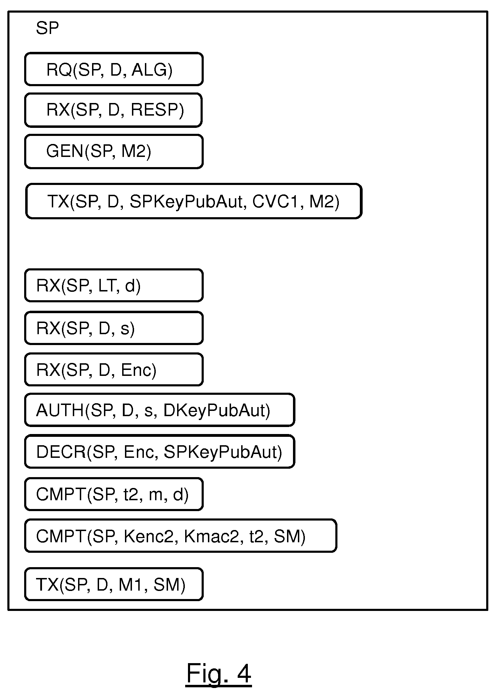

The functions of the remote server SP are illustrated in Fig. 4.

In order for the remote server SP to be aware of the different cryptographic algorithms ALG which may be processed in the electronic device D, the remote server SP is adapted to send a request RQ for said cryptographic algorithms ALG (function illustrated RQ(SP, D, ALG)).

It sends it to the electronic device D directly or via the local terminal LT, according the embodiment. Said local terminal LT relays said request to the electronic device D.

Hereinafter described, the electronic device communicates with the remote server through the local terminal by knowing that this communication can be done directly.

In a non-limitative example, when the electronic device is a smart card for example, the request RQ is an APDU (Application Protocol Data Unit) "read ef.cardaccess".

The electronic device D sends back a response RESP (function illustrated in Fig. 2 TX(D, SP, RESP), and the remote server SP is adapted to receive such a response RESP via the local terminal LT (function illustrated in Fig. 4 RX(SP, D, RESP). The response RESP comprises:
- the algorithms ALG which may be processed in the electronic device D; ,
- the domain parameters Dn1 of the electronic device D;
- the public key DKeyPubAut of the electronic device D.

After receiving such a response RESP, the remote server SP is further adapted to perform the following cryptographic functions:
- 1) generate a message M2 which will used by the electronic device D to compute a signature s as described before (function illustrated GEN (SP, M2)).
   The message M2 is a challenge. It avoids a replay attack from an attacker. It avoids an attacker to replay the same signature s so as to authenticate himself instead of the electronic device D.
   The remote server SP is further adapted to send its public authentication key SPKeyPubAut, its associated certificate CVC1 and said message M2 to the electronic device D via the local terminal LT (function illustrated TX (SP, D, SPKeyPubAut, CVC1, M2)).
   When a pseudonym Ps is used, the remote server SP is further adapted to send the public sector key SPKeyPubS within its associated certificate CVC1 to said electronic device D via said local terminal LT.
   In an embodiment, the local terminal LT may transmit the data SPKeyPubAut, CVC1, M2, SPKeyPubS above-described to the electronic device D in clear.
   In an embodiment, when the secret password is not verified by the remote server, the remote server SP is further adapted to receive data from the local terminal LT which are the first value c, the signature s and the encrypted mask Enc.
   In another embodiment, when the secret password is verified by the remote server, the remote server SP is further adapted to receive data from the local terminal LT which are the second value d (function illustrated RX(SP, LT, d)), the signature s and the encrypted mask Enc (functions illustrated RX(SP, D, s), RX(SP, D, Enc)).
   The second value d received from the local terminal LT has been:
   - either computed by said local terminal LT (when the short secret password PIN2 is entered on said local terminal LT).
   - either computed by said electronic device D (when the short secret password PIN2 is entered on said electronic device D) and relayed by said local terminal LT to said remote server SP.
   As the second value d comprises a difference between the hash H1 of the stored short secret password PIN1 and the hash H2 of the entered short secret password PIN2 when this latter is wrong, the value of said short secret password PIN1 is not revealed to the remote server SP.
   Upon reception of said data, the remote server SP is further adapted to:
- 2) authenticate the electronic device with the signature s received from said electronic device D. It verifies the signature s with the public key DKeyPubAut of said electronic device D (sent in the response RESP) (function illustrated AUTH (SP, D, s, DKeyPubAut)).
   This permits to verify that the electronic device D is not a fake one and is authentic.
   This authentication is the equivalent to what the CA2 procedure is intended to do.
   Then the remote server SP is further adapted to perform the following cryptographic function:
- 3) decrypt the encoded mask Enc received from the electronic device D with its cryptographic key which is its private authentication key SPKeyPubAut in the example illustrated by the figures (function illustrated DECR (SP, Enc, SPKeyPubAut)).
   The remote server SP is further adapted to compute a second master key t2 based on the decrypted mask m and on said first value c or second value d (according the embodiment) received from the local terminal T (function illustrated CMPT(SP, t2, m, d)).
   In the following description, the second token t2 will be taken as the master key in a non-limitative example.
   In a non-limitative embodiment, the second token t2 = d XOR m. It is to be noted that if the decrypted mask m is the good mask and the short secret password entered by the user PIN2 is the same as the one PIN1 stored in the electronic device D, the value of the second token t2 should be equal to the value of the first token t1.
   The second token t2 allows the electronic device D to verify that the remote server SP has correctly decrypted the encryption mask m, and therefore authenticate the remote server SP.
   Then the remote server SP is further adapted to perform the following cryptographic function:
- 4) compute a second session keys Kenc2, Kmac2 based on a key derivation function of said second token t2 to establish a authentication message channel SM with said electronic device D (function illustrated CMPT(SP, Kenc2, Kmac2, t2, SM)).

It is to be noted that if the second token t2 is the same as the first token t1, the second session keys Kenc2, Kmac2 will be the same than the first session keys Kenc1, Kmac1 computed by the electronic device D.

It is to be noted that if the input short secret password PIN2 is wrong (it is not equal to the stored short secret password PIN1), the second token t2 will be wrong (that is to say not equal to the first token t1) and therefore the second session keys Kenc2, Kmac2 will be wrongly computed (that is to say not equal to the first session keys Kenc1, Kmac1).

With the second sessions keys generated, an authentication message channel can now be established between the electronic device and the remote server. The remote server SP is further adapted to send an authentication message M1 to said electronic device D through said authentication message channel SM (function illustrated TX(SP, D, M1, SM)).

The authentication M1 comprises data which are encrypted with the session key Kenc2, and a MAC2 of the data in clear, said MAC2 being computed with the session key Kmac2. The data may be some data which have already been sent to the electronic device D (the certificate CVC1 in a non-limitative example or the challenge M2) so that the electronic device will be able to check the correctness of said data.

In order to authenticate the remote server SP, the electronic device D is further adapted to:

It is to be noted that when the electronic device D authenticates the remote server SP with the received authentication message M1, it will:
- a) decipher the authentication M1 with its session key Kenc1. If the authentication message M1 is correctly deciphered, it means that the two pairs of session keys Kenc1, Kmac1 and Kenc2, Kmac2 are identical. It can also means that the PIN2 entered by the end-user U is correct;
- b) verify the integrity of the authentication message M1 with its session key Kmac1, that is to say it will compute a new MAC1 with its own session key Kmac1 and compare it with the MAC2 received. If both MAC1 and MAC2 are equal, the data in the authentication message M1 have not been tampered with.

If the authentication message M1 is not correctly deciphered, (that is to say the electronic device D deciphers the authentication message M1 which does not fit the expectation) it can mean that the input short secret password PIN2 (described before) is not correct or that the remote server SP is a fake one or that there was an error introduced by the remote server SP during the decryption of the encrypted mask Enc, the computing of the second token t2 etc (in described in the following). If the authentication message M1 is correctly deciphered, the remote server SP is authenticated.

In a non-limitative embodiment, the electronic device D is further adapted to receive said authentication message M1 through said secure messaging channel SM (function illustrated RX (D, SP, M1, SM)).

In a non-limitative embodiment, the authentication message M1 comprises the certificate CVC1 of said remote server SP and the electronic device D is further adapted to:
- verify said certificate CVC1 transmitted with said authentication message M1 (function illustrated in dotted line in Fig. 2 VERIF (D, M1, CVC1)).

As the electronic device D has previously received the certificate CVC1, it compares said previously received certificate with the one transmitted with the authentication message M1.

It permits the electronic device D to verify the content of the authentication message M1. If both certificates are the same, the content of the message is correct.

It gives a complementary mean to authenticate the remote server SP by the electronic device D.

This authentication is the equivalent to what the TA2 procedure is intended to do.

Hence, the remote server SP and the electronic device D have performed a mutual authentication. Said mutual authentication permits to secure the messaging channel SM which is a communication channel though which both remote server SP and electronic device D may transmit some data.

It is to be noted that in a non-limitative embodiment, the remote server SP and the local terminal LT can communicate via the Https "HyperText Transfer Protocol Secure" protocol.

Hence the cryptographic functions performed by the remote server SP may be:
- one random computation (function referred 1 as above-described);
- one deciphering (function referred 3 as above-described);
- one verification of the signature returned by the electronic device D (function 2 referred as above-described);
- a pair of session keys computation (function referred 4 as above- described).

The number of cryptographic functions executed by said remote server SP is reduced compared to the GAP procedure where the remote server SP has to perform:
- one random computation during the TA2 procedure (for generating ephemeral key pair);
- one signature computation during the TA2 procedure;
- one key agreement during the CA2/CA3 procedure;
- one pair of session keys computation after the CA2/CA3 procedure.

The functions performed by the remote server SP in the GAP procedure are not described here in details as there are well-known by the man skilled in the art.

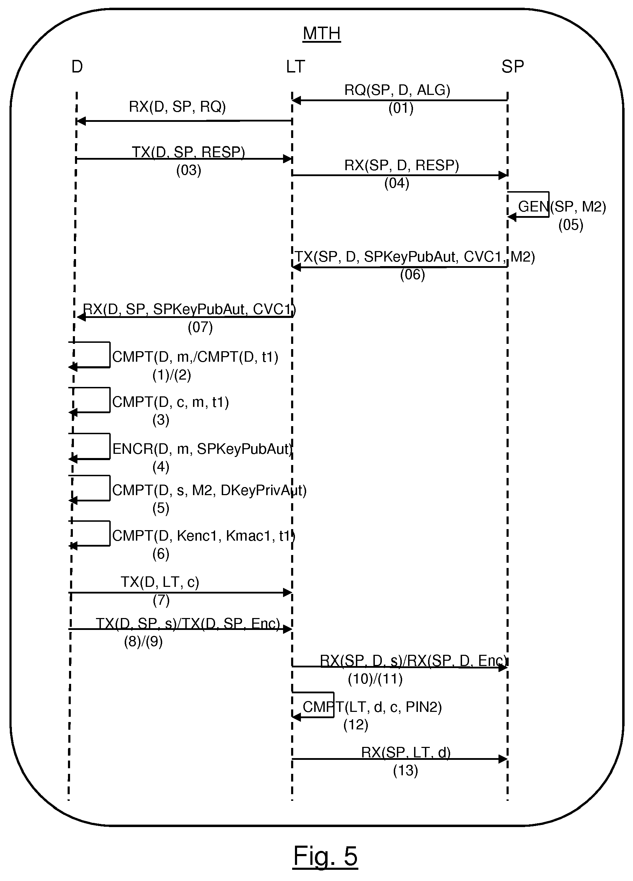

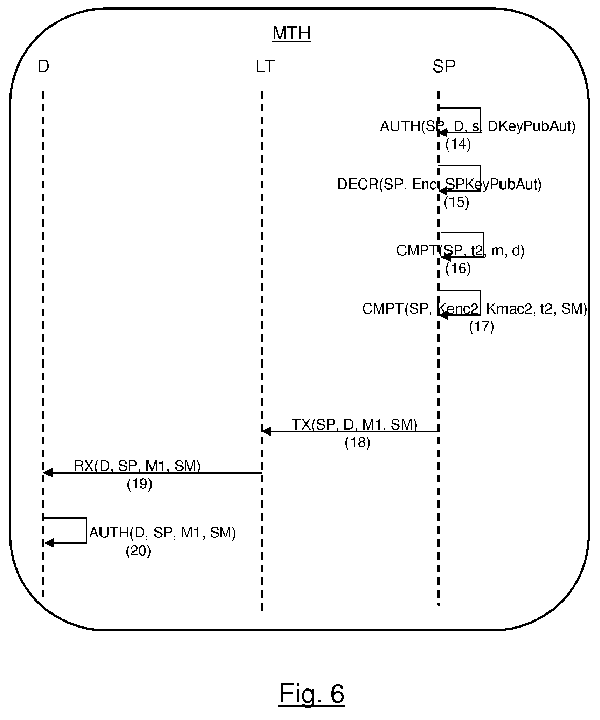

Hence, the security management system SYS is adapted to carry out a method MTH for securing a communication between a remote server SP and an electronic device D as illustrated in an example implementation in Fig. 5 and Fig. 6.

In the non-limitative embodiment illustrated hereinafter, the input short secret password PIN2 is entered on the local terminal LT.

As described before, the method MTH comprises the following initial steps illustrated in Fig. 5:
- 00) a user request an access to a service provided by the remote server SP,
- 01) request from the remote server SP to the electronic device D via the local terminal LT the available algorithms (step illustrated RQ (SP, D, ALG)).
- 02) the remote server SP receives from said electronic device D said request RQ (step illustrated RX(D, SP, RESP));
- 03) send in response by means of the electronic device D to the remote server SP via the local terminal LT its public key DKeyPubAut and its domain parameters Dn1 (step illustrated TX(D, SP, RESP));
- 04) receive by means of said remote server SP said response RESP comprising said data DKeyPubAut, Dn1 (step illustrated RX(SP, D, RESP));
- 05) generate by means of the remote server SP a Message M2 (step illustrated GEN(SP, M2));
- 06) send by means of the remote server SP to the electronic device D via the local terminal LT its public authentication key SPKeyPubAut, the certificate CVC1 and the message M2 (step illustrated TX(SP, D, SPKeyPubAut, CVC1, M2));
- 07) receive by means of the electronic device, the data SPKeyPubAut, CCV1, M2 (step illustrated RX (D, SP, SPKeyPubAut, CVC1, M2)).

As illustrated in Fig. 5 and 6, said method MTH comprises:
- 1) compute by means of said electronic device D a random mask m (step illustrated CMPT(D, m));
- 2) compute by means of said electronic device D a random first token t1 (step illustrated CMPT(D, t1));
- 3) compute by means of said electronic device D a first value c based on the random mask m and on the random first token t1 (step illustrated CMPT(D, c, m, t1));
- 4) encrypt by means of said electronic device D said random mask m (step illustrated ENCR(D, m, SPKeyPubAut));
- 5) compute by means of said electronic device D the signature s based on the message M2 received from said remote server SP (step illustrated CMPT(D, s, M2, DKeyPrivAut));
- 6) compute by means of said electronic device D the first session keys Kenc1, Kmac1 based on a key derivation function of said first token t1 (step illustrated CMPT(D, Kenc1, Kmac1, t1));
- 7) send by means of said electronic device D said first value c to a local terminal LT (step illustrated TX(D, LT, c));
- 8)9) send by means of said electronic device D said encrypted mask Enc and said signature s to said remote server SP via said local terminal LT (steps illustrated TX(D, SP, s), TX(D, SP, Enc));
- 10)11) receive by means of said remote server SP said encrypted mask Enc and said signature s (steps illustrated RX(SP, D, Enc), RX(SP, D, s));
- 12) compute by means of said local terminal LT a second value d (Step illustrated CMPT(LT, d, c, PIN2));
- 13) receive by means of said remote server SP said second value d from said local terminal LT which is based on said first value c (step illustrated RX(SP, LT, d));
- 14) authenticate said electronic device D by means of said remote server SP with said signature s (step illustrated AUTH(SP, D, s, DKeyPubAut)); authenticate the user from the first value c and the second value d received,
- 15) decrypt by means of said remote server SP said encrypted mask Enc (step illustrated DECR(SP, Enc, SPKeyPubAut));
- 16) compute by means of said remote server SP a second token t2 based on said decrypted mask m and said second value d (step illustrated CMPT(SP, t2, m, d));
- 17) compute by means of said remote server SP the second session keys Kenc2, Kmac2 based on said second token t2 to open a secure messaging channel SM (step illustrated CMPT(SP, Kenc2, Kmac2, t2, SM));
- 18) send by means of said remote server SP a authentication message M1 to said electronic device D through said secure messaging channel SM (step illustrated TX(SP, D, M1, SM));
- 19) receive by means of said electronic device D said authentication message M1 via said secure messaging channel SM (step illustrated RX(D, SP, M1, SM));
- 20) authenticate said remote server SP by means of said electronic device D with said authentication message M1 received from said remote server SP (step illustrated AUTH(D, SP, M1, SM)).

Of course if a pseudonym Ps is used, the method MTH further comprises:
- transmit by means of the electronic device D said pseudonym Ps to said remote server SP via said local terminal LT;
- received by means of said remote server SP said pseudonym Ps from said electronic device via said local terminal LT.

- send by means of the remote server SP to electronic device D via the local terminal LT its public key of the sector SPKeyPubSector through the certificate CVC1;
- receive by means of the electronic device D said data SPKeyPubSector from said remote server SP via said local terminal LT.

Hence, the mutual authentication performed between the remote server SP and the electronic device D, and the session keys generation permit to ensure a secure communication between them.

When the secure messaging channel SM is set-up between the electronic device D and the remote server SP, said electronic device D and the remote server SP may securely communicate together via said secure messaging channel SM, a communication comprising data exchanges. Said data exchanges use the generated session keys for data encryption and data integrity check (via a MAC). The data exchanged between said electronic device D and said remote server SP are the data for the targeted service the end-user U wants to access, such as in non-limitative examples a banking application, a payment application, an insurance application etc.

In non-limitative embodiments the exchange of data via said secure messaging channel SM may then be performed by means of:
- a pseudonym signature message procedure referred as PSM. In this case, data are provided by the remote server SP and are signed by the electronic device D; or
- an ERA procedure together with a public signature certificate procedure referred as PSC. In this case, data are provided by the electronic device D and are signed by the electronic device D;
- if a pseudonym Ps has not been generated before, a restricted identification protocol referred as RI to generate an electronic device-specific pseudonym Ps for a certain public sector key SPKeyPubS. This allows an (authenticated) remote server SP to recognize an electronic device D based on the specific pseudonym Ps previously received from the electronic device D without reading out any private data. Furthermore, it is computationally impossible to link pseudonyms Ps across different remote servers- public sector keys SPKeyPubS.

These procedures being well known by the man skilled in the art, they are not described here.

In the non-limitative embodiment of the electronic device D which is a smart card, the data are exchanged by means of APDU (Application Protocol Data Unit).

It is to be understood that the present invention is not limited to the aforementioned embodiments.

Hence, some embodiments of the invention may comprise one or a plurality of the following advantages:
- it is easier to implement than the GAP procedure;
- it establishes a secured messaging channel in between a remote server SP and an electronic device (only these two elements shared the key sessions).
- it enables a remote server SP to authenticate/be confident of the final end-user-real owner of the electronic device - without transfer of the PIN value PIN1 on the lines;
- it avoids a local terminal LT and a remote server SP to know the value of the short secret password PIN which is stored within the electronic device D. Therefore, it increases the security level compared to the GAP procedure;
- it requires less exchanges compare to the GAP procedure;
- it provides better timing performance compare to the GAP procedure;
- it decreases the code size of the implementation compare to the GAP procedure;
- it decreases the number of cryptographic functions performed compared to the GAP procedure;
- it permits to have a chip authentication which replaces the whole CA2 procedures and which is as secure as these procedures altogether;
- it permits to have a chip authentication with a pseudonym which replaces the CA2-RI procedure or the CA3 procedure, which is as secure as this procedure and which is less complex than this CA3 procedure;
- it permits to have a terminal authentication which replaces the TA2 procedure;
- it maintains the privacy of the end-user of an electronic device;
- the end-users' activities with different parties, such as different service provider servers, may not be linked together anymore (non-linkability) and their usage may not be traced anymore (non-traceability): their anonymity is maintained;
- it suppresses the establishment of a local secure messaging channel between the electronic device D and the local terminal LT. Hence, there is a least key computation. This decreases the number of use of cryptographic functions, the computation time.

## Claims

1. Security management system (SYS) for securing a communication between a remote server (SP) and an electronic device (D), wherein:
- said electronic device (D) being operated to:
- generate a first value by encoding a master key (t1) with a generated mask (m);
- encode the mask (m) with a cryptographic key retrievable by the remote server;
- compute a signature (s),
- compute a first session keys (kEnc1, KMac1) based on a key derivation function of said master key (t1);
- said remote server (SP) being operated to:
- receive said encrypted mask (Enc) and said signature (s) transmitted by the electronic device;
- authenticate said electronic device (D) based on a verification and a validation of the signature (s);
- decrypt said encoded mask with a retrieve cryptographic key; using said decrypted mask to decrypt the encoded master key,
- compute a second session keys (Kenc2, Kmac2) based on said decrypted master key;
- encode a message (M1) with the second session keys (Kenc2, Kmac2);
- upon reception of the encoded message, the electronic device being operated to authenticate the remote server based on a successful decryption of the encoded message with the first session keys, a secure message channel is established between the electronic device and the remote server when the authentication of the remote server is successful.

2. Security management system (SYS) according to claim 1, wherein when an authentication of a user of the electronic device is performed by the remote server the followings steps are performed:
said electronic device (D) being operated to:
- compute a first hash H1 from a stored secret password (PIN1) and add the first hash into the generation of the first value,
- compute a second hash H2 from a entered secret password (PIN2) by the user and add the first hash with the second hash into the generation of a second value,
- the first value and the second value being generated so that if the first value equal to the second value, then the entered PIN corresponds to the stored PIN and the user is authenticated.

3. Security management system (SYS) according to according to claim 2, wherein said electronic device communicates with the remote server by means of a local terminal (LT) which is adapted to:
- compute said second value (d);
- receive said first value (c), said encrypted mask (Enc) and said signature (s) from said electronic device (D); and
- transmit said encrypted mask (Enc), said signature (s), said first value (c) and said second value (d) to said remote server (SP).

4. Security management system (SYS) according the previous claim 3, wherein said local terminal (LT) is further adapted to receive an input secret password (PIN2) and to compute said second value (d) based on said input secret password (PIN2).

5. Security management system (SYS) according to anyone of the previous claims 1 to 4, wherein said electronic device (D) further comprises a pair of public-private keys (DKeyPubAut, DKeyPrivAut) and is further adapted to:
- compute said signature (s) using said private key (DKeyPrivAut);
- send said public key (DKeyPubAut) to said remote server (SP).

6. Security management system (SYS) according to anyone of the previous claims 1 to 5, wherein said remote server (SP) comprises a pair of public and private authentication keys (SPKeyPubAut, SPKeyPrivAut) and is further adapted to send said public authentication key (SPKeyPubAut) to said electronic device (D).

7. Security management system (SYS) according to the previous claim 6, wherein
- said electronic device (D) being adapted to encode said mask (m) using said public authentication key (SPKeyPubAut) or with a cryptographic key shared between the electronic device and the remote server;
- said remote server (SP) being adapted to decrypt said encrypted mask (Enc) using said private authentication key (SPKeyPrivAut) or with the shared cryptographic key.

8. Security management system (SYS) according to anyone of the previous claims 6 to 7, wherein:
- said remote server (SP) is further adapted to send a certificate (CVC1) of said public authentication key (SPKeyPubAut) to said electronic device (D);
- said electronic device (D) is further adapted to check said certificate (CVC1) using said public authentication key (SPKeyPubAut).

9. Security management system (SYS) according to anyone of the previous claims 1 to 8, wherein the authentication message (M1) comprises a certificate (CVC2) of said remote server (SP) and the electronic device (D) is further adapted to:
- decipher and verify the integrity of said authentication message (M1) with its session keys (Kenc1, Kmac1);
- verify said certificate (CVC2).

10. Security management system (SYS) according to any one of the previous claims 1 to 9, wherein:
- said remote server (SP) further comprises a pair of public-private sector keys (SPKeyPubS, SPKeyPrivS) and is further adapted to send said public sector key (SPKeyPubS) to said electronic device (D);
- said electronic device (D) is further adapted to compute a pseudonym (Ps) based on said public sector key (SPKeyPubS) and to compute said signature (s) based on said pseudonym (Ps).

11. Security management system (SYS) according to any one of the previous claims 1 to 10, wherein the master key is pre-stored into the electronic device or generated at each establishment of a secure channel message between the electronic device and the remote server.

12. Security management system (SYS) according to any one of the previous claims 1 to 11, wherein said electronic device (D) is a secure element.

13. Security management system (SYS) according to any one of the previous claims 1 to 12, wherein said remote server (SP) is a service provider server.

14. Electronic device (D) adapted to cooperate with a remote server (SP) in order to secure a communication with said remote server (SP), according any previous claims, wherein said electronic device (D) is adapted to:
- generate a first value by encoding a master key (t1) with a generated mask (m);
- encode the mask (m) with a cryptographic key retrievable by the remote server;
- compute a signature (s),
- compute a first session keys (kEnc1, KMac1) based on a key derivation function of said master key (t1);
- send said encrypted mask (Enc) and said signature (s) to said remote server (SP); and
- authenticate the remote server based on a successful decryption of a received encoded message with the first session keys, a secure message channel is established between the electronic device and the remote server when the authentication of the remote server is successful.

15. Remote server (SP) adapted to cooperate with an electronic device (D) in order to secure a communication with said electronic device (D), according any of the previous claims, wherein said remote server (SP) is adapted to:
- receive said encrypted mask (Enc) and said signature (s) transmitted by the electronic device;
- authenticate said electronic device (D) based on a verification and a validation of the signature (s);
- decrypt said encoded mask with a retrieve cryptographic key; using said decrypted mask to decrypt the encoded master key,
- compute a second session keys (Kenc2, Kmac2) based on said decrypted master key;
- encode a message (M1) with the second session keys (Kenc2, Kmac2);
- send said encoded message to the electronic device to request its authentication to the electronic device and to open a secure messaging channel (SM) with this electronic device.

16. Method (MTH) for securing a communication between a remote server (SP) and an electronic device (D), according to any of the previous claims, wherein said method (MTH) comprises:
- said electronic device (D) being operated to:
- generate a first value by encoding a master key (t1) with a generated mask (m);
- encode the mask (m) with a cryptographic key retrievable by the remote server;
- compute a signature (s),
- compute a first session keys (kEnc1, KMac1) based on a key derivation function of said master key (t1);
- said remote server (SP) being operated to:
- receive said encrypted mask (Enc) and said signature (s) transmitted by the electronic device;
- authenticate said electronic device (D) based on a verification and a validation of the signature (s);
- decrypt said encoded mask with a retrieve cryptographic key; using said decrypted mask to decrypt the encoded master key,
- compute a second session keys (Kenc2, Kmac2) based on said decrypted master key;
- encode a message (M1) with the second session keys (Kenc2, Kmac2);
- upon reception of the encoded message, the electronic device being operated to authenticate the remote server based on a successful decryption of the encoded message with the first session keys, a secure message channel is established between the electronic device and the remote server when the authentication of the remote server is successful.
